# EUROPÄISCHE PATENTANMELDUNG

(11) **EP 2 045 072 A1**
(43) Veröffentlichungstag der Anmeldung: **08.04.2009**
(21) Anmeldenummer: 07405301.8
(22) Anmeldetag: 04.10.2007
(51) Int. Cl.: B32B 27/00

(54) **Laminate für leicht zu öffnende Verpackungen**

(71) Anmelder: Alcan Technology & Management Ltd., 8212 Neuhausen am Rheinfall (CH)
(72) Erfinder: Pasbrig, Ewin, 78224 Singen (DE)
(74) Vertreter: Burkhart, Hans

(57) **Zusammenfassung**

Ein Laminat zur Herstellung von leicht zu öffnenden Verpackungen ohne Öffnungshilfe umfasst eine 4 bis 10 µm dicke Kunststofffolie aus biaxial orientiertem Polyester, Polypropylen oder Polyamid, optional als Barriere gegen einen Durchtritt von Wasserdampf, Gasen und Aromastoffen eine Aluminiumfolie, eine im Vakuum aufgedampfte oder eine durch Lackieren, Extrusionsbeschichten oder als Kunststofffolie durch Kaschieren aufgebrachte Barriereschicht und eine Siegelschicht.

## Beschreibung

Die Erfindung betrifft Laminate zur Herstellung von leicht zu öffnenden Verpackungen ohne Öffnungshilfe und aus den Laminaten hergestellte Verpackungen.

Papierfreie Laminate zur Herstellung von Flachbeuteln mit drei oder vier randständigen Siegelnähten -- sogenannte 4-Siegelrand- und 3-Siegelrandbeutel - sowie Schlauchbeuteln und Stick-Packs mit einer Längssiegelnaht und zwei Quersiegelnähten haben auf der Aussenseite überwiegend eine biaxial orientierte Polyesterfolie oder biaxial orientierte Folien aus Polypropylen oder Polyamid einer Dicke von mindestens 12 µm. Für den Konsumenten ist es oft sehr schwierig, den Beutel durch Aufreissen zu öffnen, wenn keine Öffnungshilfe vorhanden ist.

Eine bekannte Öffnungshilfe besteht aus einer in der Abpackanlage üblicherweise am fertigen Beutel in eine Siegelnaht eingebrachte Kerbe. Bei einer anderen bekannten Öffnungshilfe wird das Laminat vor der Beutelfertigung mittels Laserschnitten im vorgesehenen Öffnungsbereich lokal geschwächt. In beiden Fällen besteht die Möglichkeit, dass eine vorhandene Barriereschicht geschädigt wird oder eine Kerbe in den ungesiegelten Bereich hineinreicht.

Bei Laminaten zur Herstellung von Streifenpackung wird für eine leichtere Einreissbarkeit überwiegend Zellglas als Kaschierfolie in einer Dicke > 20 µm verwendet. Die Ressourcen von Zellglas sind limitiert, und die Herstellung beeinträchtigt die Umwelt. Zum Schutz vor Feuchtigkeit wird Zellglas üblicherweise auch noch mit einen Lack versehen. Bei Verwendung biaxial orientierter Folien aus Polyester, Polypropylen oder Polyamid ist wie bei den Beuteln eine Einreisshilfe erforderlich, oder die Öffnung erfolgt durch Schneiden mit einer Schere, was die Verbraucherfreundlichkeit der Verpackung beeinträchtigt.

Der Erfindung liegt die Aufgabe zugrunde, Laminate bereitzustellen, die sich zu Beuteln und Streifenpackungen verarbeiten lassen und die ohne Hilfsmittel und Öffnungshilfen leicht aufzureissen sind.

Zur erfindungsgemässen Lösung der Aufgabe führt ein Laminat, das eine 4 bis 10 µm dicke Kunststofffolie aus biaxial orientiertem Polyester, Polypropylen oder Polyamid, optional als Barriere gegen einen Durchtritt von Wasserdampf, Gasen und Aromastoffen eine Aluminiumfolie, eine im Vakuum aufgedampfte oder eine durch Lackieren, Extrusionsbeschichten oder als Kunststofffolie durch Kaschieren aufgebrachte Barriereschicht und eine Siegelschicht umfasst. Bei Verwendung einer Aluminiumfolie als Barriereschicht kann der Kunststofffolie durch wenigstens eine Lackschicht ersetzt sein.

Abhängig von den an die Barriereeigenschaften gestellten Anforderungen lassen sich die Laminate in drei Gruppen einteilen:
1. Laminate mit hoher Barrierewirkung. Diese enthalten eine Aluminiumfolie als Barriereschicht.
2. Laminate mit mittlerer Barrierewirkung. Diese enthalten metallisierte Kunststofffolien oder keramischen Beschichtungen, wie z.B. SiOₓ oder Al₂O₃ als Barriereschicht.
3. Laminate, die keine besonderen Barriereeigenschaften erfordern. Diese enthalten keine speziellen Barriereschichten.

Die aus den Laminaten herzustellenden Verpackungen sind normalerweise bedruckt und je nach Druckverfahren und Drucktinte gegebenenfalls überlackiert.

Laminate mit hoher Barrierewirkung haben den prinzipiellen Aufbau:
Überlack / Bedruckung / Kunststofffolie / Aluminiumfolie / Siegelschicht
Kunststofffolie / Bedruckung / Aluminiumfolie / Siegelschicht
Überlack / Bedruckung / Aluminiumfolie / Siegelschicht
Überlack / Bedruckung / Lack / Aluminiumfolie / Siegelschicht

Die Siegelschichten sind üblicherweise Polyethylene, z.B. LDPE, LLDPE, MDPE und Mischungen davon oder coextrudiert, Metallozene Polyethylene und lonomere, z.B. Surlyn®, oder coextrudierte Folien aus diesen Materialien mit PE als Trägerschicht. Als Barriere gegenüber Füllstoffen kann auch Polyacrylnitril (PAN), z.B. Barex® oder Aclar® eingesetzt werden. Für spezielle Anwendungen können auch Polypropylene verwendet werden. Die Dicke der Siegelschichten liegt im Bereich von 10 bis 100 µm, vorzugsweise 15 bis 75 µm.

Die Siegelschichten können mittels Extrusionsbeschichtung oder Kaschierung auf das Trägermaterial aufgebracht werden.

Die Dicke der für Beutel als Barriere eingesetzten Aluminiumfolie beträgt etwa 5 bis 30 µm, vorzugsweise 7 bis 25 µm, und für Streifenpackung etwa 12 bis 50 µm, vorzugsweise 15 bis 40 µm.

Die Dicke der auf der Aussenseite angeordneten, biaxial orientierten Kunststofffolie aus Polyester, Polypropylen oder Polyamid beträgt 4 bis 10 µm, vorzugsweise 6 bis 8 µm. Die Kunststofffolie und ist gegen die Aluminiumfolie mit den üblichen Methoden und Stoffen kaschiert. Die Kunststofffolie kann konterbedruckt sein, oder der Druck erfolgt frontal. Dabei ist ein entsprechend gleitfähiger Überlack erforderlich, falls die Druckfarbe diese Eigenschaft nicht bereits aufweist.

Das Aluminium der Aussenseite kann auch nur lackiert / bedruckt / überlackiert oder bedruckt / überlackiert sein. Das Auftragsgewicht der Lacke beträgt 0,2 bis 3 g/m², vorzugsweise 0,5 bis 2 g/m². Als Lackbasis dient beispielsweise Nitrozellulose, Acrylat, Polyurethan, Polyester, Polystyrolharze, Harze auf Basis Harnstoff oder Melaminharz, sowie Mischungen hiervon mit entsprechenden Zusätzen zur Verbesserung der Haftfestigkeit, der Hitzebeständigkeit, des Gleitverhaltens, des Glanzes oder der Mattigkeit, und der Bedruckbarkeit bei inline und konventionellen Druckverfahren.

Damit die Maschinengängigkeit gewährleistet ist, muss die Aussenseite die gleichen Gleiteigenschaften aufweisen wie der Kunststoffverbund.

Laminate mit hoher Barrierewirkung weisen beispielsweise folgende Aufbauten auf (KM = Kaschiermittel):
6 µm PET-Folie / KM / 7 µm Aluminiumfolie / KM / 50 µm Siegelschicht
6 µm PET-Folie / KM / 7 µm Aluminiumfolie / 40 g/m² Siegelschicht
6 µm PET-Folie / KM / 9 µm Aluminiumfolie / KM / 40 µm Siegelschicht
6 µm PET-Folie / KM / 9 µpm Aluminiumfolie / 40 g/m² Siegelschicht
6 µm PET-Folie / KM / 9 µm Aluminiumfolie / KM / 20 µm Siegelschicht
6 µm PET-Folie / KM / 12 µm Aluminiumfolie / 40 g/m² Siegelschicht
6 µm PET-Folie / KM / 16 µm Aluminiumfolie / 30 µm Siegelschicht
6 µm PET-Folie / KM / 20 µm Aluminiumfolie / 40 g/m² Siegelschicht
1,0 g/m² Lack / Bedruckung / 1,0 g/m² Lack / 7 µm Aluminiumfolie / KM /50 µm Siegelschicht
1,0 g/m² Lack / Bedruckung / 9 µm Aluminiumfolie / KM / 40 µm Siegelschicht
1,0 g/m² Lack / Bedruckung / 0,5 g/m² Lack / 20 µm Aluminiumfolie / KM /30 µm Siegelschicht

Laminate mit mittlerer Barrierewirkung weisen beispielsweise folgende Aufbauten auf:
Überlack / Bedruckung / Kunststofffolie / Barriereschicht / Siegelschicht
Überlack / Bedruckung / Barriereschicht / Kunststofffolie / Siegelschicht

Die Siegelschichten sind üblicherweise Polyethylene, z.B. LDPE, LLDPE, MDPE und Mischungen davon oder coextrudiert, Metallozene Polyethylene und lonomere, z.B. Surlyn®, oder coextrudierte Foliee aus diesen Materialien mit PE als Trägerschicht. Als Barriere gegenüber Füllstoffen kann auch Polyacrylnitril (PAN), z.B. Barex® oder Aclar® eingesetzt werden. Für spezielle Anwendungen können auch Polypropylene verwendet werden. Die Dicke der Siegelschichten liegt im Bereich von 10 bis 100 µm, vorzugsweise 15 bis 75 µm.

Die Siegelschichten können mittels Extrusionsbeschichtung oder Kaschierung auf das Trägermaterial aufgebracht werden.

Die Dicke der auf der Aussenseite angeordneten, biaxial orientierten Kunststofffolie aus Polyester, Polypropylen oder Polyamid beträgt 4 bis 10 µm, vorzugsweise 6 bis 8 µm. Die Kunststofffolie kann konterbedruckt sein, oder der Druck erfolgt frontal. Dabei ist ein entsprechend gleitfähiger Überlack erforderlich, falls die Druckfarbe diese Eigenschaft nicht bereits aufweist.

Geeignete Barriereschichten sind z.B. Siliziumoxid (SiOₓ), Metalloxide, wie z.B. Aluminium- oder Eisenoxid, aus dem Vakuum aufgedampftes Metall, wie z.B. Aluminium, Chrom, Kupfer, Eisen, Platin, Gold und Silber, Lack auf der Basis von Ormoceren oder eine Beschichtung aus Polyvinylidenchlorid (PVdC).

Die Barriereschicht kann auf der Innen- oder Aussenseite der äusseren Kunststofffolie sein.

Laminate mit mittlerer Barrierewirkung weisen beispielsweise folgende Aufbauten auf (KM = Kaschiermittel):
1,0 g/m² Lack / Bedruckung / Al₂O₃-Beschichtung auf 6 µm PET-Folie / KM /50 µm Siegelschicht
1,0 g/m² Lack / Bedruckung / SiOₓ-Beschichtung auf 6 µm PET-Folie / KM /40 µm Siegelschicht
1,5 g/m² Ormocere-Lack / Bedruckung / 8 µm Polypropylen / 40 g/m² Siegelschicht
1,0 g/m² Ormocere-Lack / Bedruckung / SiOₓ-Beschichtung auf 6 µm PET-Folie / KM / 40 µm Siegelschicht
0,5 g/m² Lack/Bedruckung / PVdC / 6 µm PET-Folie / 40 g/m² Siegelschicht
0,5 g/m² Lack / Bedruckung / 6 µm PET-Folie / PVdC / KM / 30 µm Siegelschicht
0,5 g/m² Lack / Bedruckung / 8 µm Polypropylen-Folie / 1,2 g/m² Ormocere-Lack / 40 g/m² Siegelschicht
0,5 g/m² Lack / SiOₓ-Beschichtung auf 6 µm PET-Folie / Bedruckung / KM /30 µm Siegelschicht
1,0 g/m² Lack / Bedruckung / 6 µm PET-Folie / KM / 15 µm Aclar® als Siegelschicht
1,0 g/m² Lack / Bedruckung / 8 µm Polyamid / KM / 20 µm monaxial orientiertes Aclar® als Siegelschicht

Laminate, die keine besonderen Barriereeigenschaften erfordern weisen beispielsweise folgende Aufbauten auf:
Überlack / Bedruckung / Kunststofffolie / Siegelschicht
Kunststofffolie / Bedruckung / Siegelschicht
Lack / Kunststofffolie / Bedruckung / Siegelschicht

Die Siegelschichten sind üblicherweise Polyethylene, z.B. LDPE, LLDPE, MDPE und Mischungen davon oder coextrudiert, Metallozene Polyethylene und lonomere, z.B. Surlyn®, oder coextrudierte Folien aus diesen Materialien mit PE als Trägerschicht. Als Barriere gegenüber Füllstoffen kann auch Polyacrylnitril (PAN), z.B. Barex® oder Aclar® eingesetzt werden. Für spezielle Anwendungen können auch Polypropylene verwendet werden. Die Dicke der Siegelschichten liegt im Bereich von 10 bis 100 µm, vorzugsweise 15 bis 75 µm.

Die Siegelschichten können mittels Extrusionsbeschichtung oder Kaschierung auf das Trägermaterial aufgebracht werden.

Die Dicke der auf der Aussenseite angeordneten, biaxial orientierten Kunststofffolie aus Polyester, Polypropylen oder Polyamid beträgt 4 bis 10 µm, vorzugsweise 6 bis 8 µm. Die Kunststofffolie kann konterbedruckt sein, oder der Druck erfolgt frontal. Dabei ist ein entsprechend gleitfähiger Überlack erforderlich, falls die Druckfarbe diese Eigenschaft nicht bereits aufweist.

Laminate, die keine besonderen Barriereeigenschaften erfordern, weisen beispielsweise folgende Aufbauten auf:
6 µm PET-Folie / Bedruckung / KM / 30 µm Siegelschicht
0,5 g/m² Lack / 6 µm PET-Folie / Bedruckung / KM / 30 µm Siegelschicht
0,5 g/m² Lack / Bedruckung / 6 µm PET-Folie / KM / 30 µm Siegelschicht
1,0 g/m² Lack / Bedruckung / 6 µm PET-Folie / KM / 50 µm Siegelschicht
1,0 g/m² Lack / Bedruckung / 6 µm PET-Folie / KM / 40 µm Siegelschicht
1,2 g/m² Lack / Bedruckung / 8 µm PA-Folie / KM / 20 µm Siegelschicht
1,5 g/m² Lack / Bedruckung / 6 µm PP-Folie / 40 g/m² Siegelschicht
0,5 g/m² Lack / 8 µm PP-Folie /Bedruckung / KM / 30 µm Siegelschicht
0,5 g/m² Lack / Bedruckung / 8 µm PP-Folie / 40 g/m² Siegelschicht

Die vorstehend beschriebenen Laminate können auch miteinander kombiniert sein. Beispielsweise können Vorder- und Rückseite eines Beutels oder einer Streifenpackung aus einem unterschiedlich aufgebauten Laminat bestehen.

Die Laminate eignen sich insbesondere für die Herstellung von 3- und 4-Siegelrandbeuteln, Schlauchbeuteln und Stick-Packs.

## Patentansprüche

1. Laminat zur Herstellung von leicht zu öffnenden Verpackungen ohne Öffnungshilfe, wobei das Laminat eine 4 bis 10 µm dicke Kunststofffolie aus biaxial orientiertem Polyester, Polypropylen oder Polyamid, optional als Barriere gegen einen Durchtritt von Wasserdampf, Gasen und Aromastoffen eine Aluminiumfolie, eine im Vakuum aufgedampfte oder eine durch Lackieren, Extrusionsbeschichten oder als Kunststofffolie durch Kaschieren aufgebrachte Barriereschicht und eine Siegelschicht umfasst.

2. Laminat nach Anspruch 1, **dadurch gekennzeichnet, dass** die Dicke der biaxial orientierten Kunststofffolie 6 bis 8 µm beträgt.

3. Laminat nach Anspruch 1 oder 2 mit hoher Barrierewirkung, **gekennzeichnet durch** einen der folgenden Aufbauten:
Überlack / Bedruckung / Kunststofffolie / Aluminiumfolie / Siegelschicht
Kunststofffolie / Bedruckung / Aluminiumfolie / Siegelschicht.

4. Laminat zur Herstellung von leicht zu öffnenden Verpackungen ohne Öffnungshilfe, wobei das Laminat wenigstens eine Lackschicht, eine Aluminiumfolie als Barriere gegen einen Durchtritt von Wasserdampf, Gasen und Aromastoffen und eine Siegelschicht umfasst.

5. Laminat nach Anspruch 4 mit hoher Barrierewirkung, **gekennzeichnet durch** einen der folgenden Aufbauten:
Überlack / Bedruckung / Aluminiumfolie / Siegelschicht
Überlack / Bedruckung / Lack / Aluminiumfolie / Siegelschicht.

6. Laminat nach einem der Ansprüche 1 bis 3 mit mittlerer Barrierewirkung, **gekennzeichnet durch** einen der folgenden Aufbauten:
Überlack / Bedruckung / Kunststofffolie / Barriereschicht / Siegelschicht
Überlack / Bedruckung / Barriereschicht / Kunststofffolie / Siegelschicht.

7. Laminat nach einem der Ansprüche 1 bis 3 ohne besondere Barriereeigenschaften, **gekennzeichnet durch** einen der folgenden Aufbauten:
Überlack / Bedruckung / Kunststofffolie / Siegelschicht
Kunststofffolie / Bedruckung / Siegelschicht
Lack / Kunststofffolie / Bedruckung / Siegelschicht.

8. Verpackung aus einem ein Füllgut umhüllenden und zum Öffnen der Verpackung ohne Öffnungshilfe leicht einreissbaren Laminat, wobei das Laminat eine 4 bis 10 µm dicke Kunststofffolie aus biaxial orientiertem Polyester, Polypropylen oder Polyamid und optional als Barriere gegen einen Durchtritt von Wasserdampf, Gasen und Aromastoffen eine Aluminiumfolie, eine im Vakuum aufgedampfte oder eine durch Lackieren, Extrusionsbeschichten oder als Kunststofffolie durch Kaschieren aufgebrachte Barriereschicht und eine Siegelschicht umfasst.

9. Verpackung nach Anspruch 8, **dadurch gekennzeichnet, dass** die Dicke der biaxial orientierten Kunststofffolie 6 bis 8 µm beträgt.

10. Verpackung nach Anspruch 8 oder 9 mit hoher Barrierewirkung, **gekennzeichnet durch** einen der folgenden Aufbauten:
Überlack / Bedruckung / Kunststofffolie / Aluminiumfolie / Siegelschicht
Kunststofffolie / Bedruckung / Aluminiumfolie / Siegelschicht.

11. Verpackung aus einem ein Füllgut umhüllenden und zum Öffnen der Verpackung ohne Öffnungshilfe leicht einreissbaren Laminat, wobei das Laminat wenigstens eine Lackschicht, eine Aluminiumfolie als Barriere gegen einen Durchtritt von Wasserdampf, Gasen und Aromastoffen und eine Siegelschicht umfasst.

12. Verpackung nach Anspruch 11 mit hoher Barrierewirkung, **gekennzeichnet durch** einen der folgenden Aufbauten:
Überlack / Bedruckung / Aluminiumfolie / Siegelschicht
Überlack / Bedruckung / Lack / Aluminiumfolie / Siegelschicht.

13. Verpackung nach einem der Ansprüche 8 bis 10 mit mittlerer Barrierewirkung, **gekennzeichnet durch** einen der folgenden Aufbauten:
Überlack / Bedruckung / Kunststofffolie / Barriereschicht / Siegelschicht
Überlack / Bedruckung / Barriereschicht / Kunststofffolie / Siegelschicht.

14. Verpackung nach einem der Ansprüche 8 bis 10 ohne besondere Barriereeigenschaften, **gekennzeichnet durch** einen der folgenden Aufbauten:
Überlack / Bedruckung / Kunststofffolie / Siegelschicht
Kunststofffolie / Bedruckung / Siegelschicht
Lack / Kunststofffolie / Bedruckung / Siegelschicht.

15. Verwendung eines Laminates nach einem der Ansprüche 1 bis 7 zur Herstellung von 3- und 4-Siegelrandbeuteln, Schlauchbeuteln und Stick-Packs.
